**Europäisches Patentamt**

**European Patent Office**

**Office européen des brevets**

(11) Veröffentlichungsnummer: **0 264 763 B1**

(12) **EUROPÄISCHE PATENTSCHRIFT**

(45) Veröffentlichungstag der Patentschrift: **11.12.91**

(51) Int. Cl.5: **H02B 11/04**

(21) Anmeldenummer: **87114874.8**

(22) Anmeldetag: **12.10.87**

(54) Gekapseltes elektrisches Schaltfeld.

(30) Priorität: **23.10.86 DE 8628308 U**

(43) Veröffentlichungstag der Anmeldung:
**27.04.88 Patentblatt 88/17**

(45) Bekanntmachung des Hinweises auf die
Patenterteilung:
**11.12.91 Patentblatt 91/50**

(84) Benannte Vertragsstaaten:
**AT DE GB NL**

(56) Entgegenhaltungen:
**DE-A- 2 805 617**
**DE-U- 8 220 003**
**FR-A- 1 182 018**
**FR-A- 2 031 738**

(73) Patentinhaber: **SIEMENS AKTIENGESELL-
SCHAFT**
**Wittelsbacherplatz 2**
**W-8000 München 2(DE)**

(72) Erfinder: **Poth, Rainer**
**Freiherr-von-Stein-Strasse 2**
**W-6368 Vilbel 4(DE)**
Erfinder: **Gronemann, Karl-Heinz, Dipl.-Ing.**
**Talstrasse 13**
**W-6057 Dietzenbach(DE)**

## Beschreibung

Die Erfindung bezieht sich auf ein gekapseltes elektrisches Schaltfeld nach dem Oberbegriff des Anspruches 1.

Es ist bereits ein gekapseltes elektrisches Schaltfeld der im Oberbegriff des Anspruches 1 genannten Art bekannt. Für den Antrieb der Blende ist hierbei ein Scherengetriebe vorgesehen, das vom Schalterwagen, während seiner Fahrbewegungen von der Trennstellung in die Betreibsstellung und zurück, bewegt wird. Die bekannte Anordnung erfordert einen verhältnismäßig langen Fahrweg des Schalterwagens, um dessen Bewegung in eine ausreichende Bewegung der Blende umzusetzen (DE-U- 82 20 003 und FR-A- 20 31 738).

Aufgabe der Erfindung ist es, das gekapselte elektrische Schaltfeld der im Oberbegriff des Anspruches 1 genannten Art so auszubilden, daß die Blende unabhängig vom Schalterwagen betätigbar ist, wobei die Bedingung gilt, daß die Tür erst geöffnet werden kann, wenn der Schalterwagen in der Trennstellung steht und die Blende die Öffnungen in der Schottwand abdeckt.

Die gestellte Aufgabe wird erfindungsgemäß durch die im kennzeichnenden Teil des Anspruches 1 angegebene Ausbildung gelöst.

Eine zweckmäßige Weiterbildung des Erfindungsgegenstandes ist im Anspruch 2 angegeben.

Ein Ausführungsbeispiel der Erfindung ist in der Zeichnung rein schematisch dargestellt. Es zeigen:

Fig. 1      eine perspektivische Ansicht eines elektrischen Schaltfeldes mit geöffneter Tür, wobei die rechte Seitenverkleidung und eine Deckverkleidung eines Schalterraumes entfernt sind.

Fig. 2      eine Innenansicht des rechten Pfostens eines Gerüstes des Schalterraumes.

Fig. 3      einen Schnitt nach Linie III-III in Fig. 2.

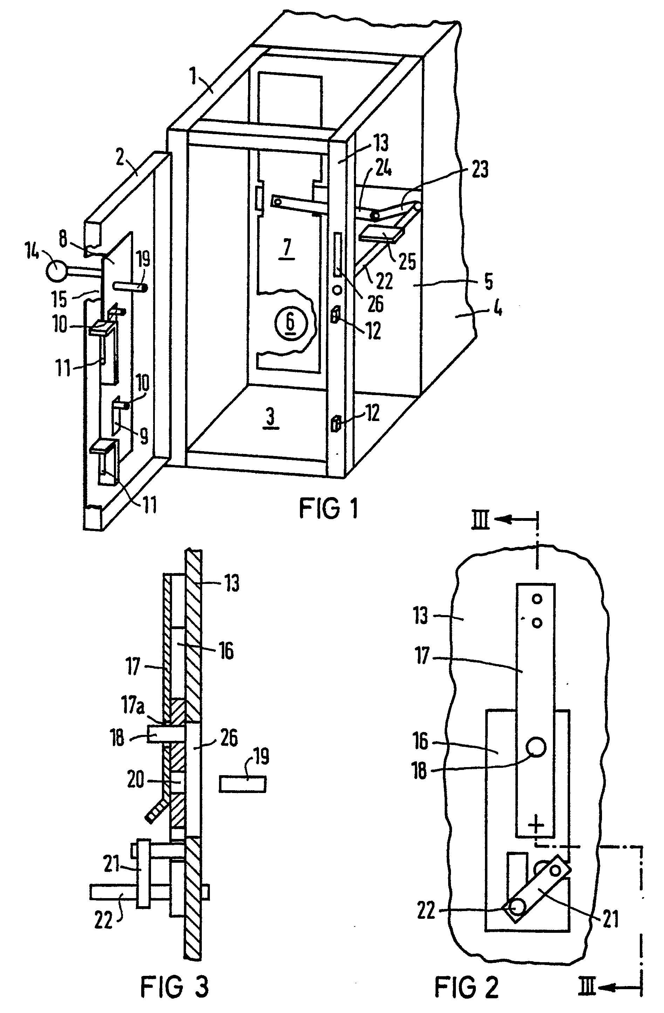

In der Fig. 1 ist mit 1 ein Gerüst einer Kapselung eines elektrischen Schaltfeldes bezeichent.

Das Bezugszeichen 2 gilt für eine Tür, die am Gerüst 1 angeschlagen ist. In ihrer geschlossenen Lage versperrt die Tür 2 einen Zugang zu einem Schalterraum 3, in den bei offener Tür ein nicht dargestellter Schalterwagen einfahrbar ist. Der Schalterwagen ist im Schalterraum 3 bei geschlossener Tür 2 aus einer Trennstellung in eine Betriebsstellung fahrbar.

Hinter dem Schalterraum 3 befinden sich ein Kabelanschlußraum und ein Sammelschienenraum. Die beiden Räume sind nicht sichtbar dargestellt. Sie befinden sich hinter einer Verkleidung 4, die Teil der Kapselung des Schaltfeldes ist.

Der Schalterraum 3 ist von dem Sammelschienenraum und dem Kabelanschlußraum durch eine Schottwand 5 getrennt. In der Schottwand 5 sind Öffnungen vorgesehen, die in nicht dargestellter Weise von Einfahrkontaktstücken des Schalterwagens durchgriffen sind, wen sich dieser in seiner Betriebsstellung befindet. Eine der genannten Öffnungen ist in Fig. 1 sichtbar und mit 6 bezeichnet.

Alle Öffnungen 6 der Schottwand 5 sind in der Trennstellung des Schalterwagens durch eine Blende 7 abgedeckt, für die häufig auch die Bezeichnung Shutter verwendet wird. Die Blende 7 schließt auch dann die Öffnungen 6, wenn, wie dargestellt, der Schalterwagen aus dem Schalterraum 3 herausgefahren ist. Im dargestellten Beispiel ist die Blende 7 vertikal angeordnet, weil die Öffnungen 6 in einer Reihe übereinander liegen.

Am Rücken der Tür 2 ist eine verschiebbare Leiste 8 angebracht. Die Leiste 8 enthält Ausnehmungen 9, von denen jede von einem Bolzen 10 durchgriffen ist, der zur Führung der Leiste 8 dient. Die Leiste 8 kann auch auf andere Weise geführt sein. Sie trägt Riegel 11, die bei geschlossener Tür 2 durch Verschieben der Leiste 8, in Riegelaufnahmen 12 eingreifen, die an einem Pfosten 13 des Gerüstes 1 befestigt sind. Mit dem Eingriff der Riegel 11 in die Riegelaufnahmen 12 ist die Tür 2 verriegelt. Um die Tür von außen verriegeln zu können, ist an der Leiste 8 eine Handhabe 14 vorgesehen, die einen Längsschlitz 15 des Türblattes durchgreift.

Der Leiste 8 ist ein am Rücken des Pfostens 13 angeordneter Schieber 16 zugeordnet (Fig. 2 und 3). Der Schieber 16 liegt am Rücken des Pfostens 13 an und ist dort auf nicht gezeigte Weise geführt. Auf seiner Rückseite liegt eine Blattfeder 17 auf, deren oberes Ende festgelegt ist, wie In Fig. 2 gezeigt. Der Schieber 16 trägt einen Stift 18, der bei offener Tür 2 eine Ausnehmung 17a der Blattfeder 17 durchgreift.

Die Blattfeder 17 ist durch einen an der Leiste 8 befestigten Zapfen 19 gegen die ihr eigene Federkraft auslenkbar. Um die Blattfeder 17 auslenken zu können, ist im Schieber 16 für den Durchgriff des Zapfens 19 ein Durchgangsloch 20 vorgesehen (Fig. 3). Mit dem Zapfen 19 ist eine Verriegelungsbewegung der Leiste 8 auf den Schieber 16 übertragbar, wenn der Zapfen 19 die Blattfeder 17 vom Stift 18 freigestellt hat, was bei vollständig geschlossener Tür 2 der Fall ist.

Am Schieber 16 ist eine Kurbel 21 angelenkt, deren freies Ende an einer Welle 22 angreift. Die Welle 22 erstreckt sich, entsprechend gelagert, bis zur Schottwand 5 und trägt dort einen ersten Hebel 23 einer Knickhebeleinrichtung, die durch einen zweiten Hebel 24 vervollständigt wird, der an der Blende 7 angelenkt ist.

Die Welle 22 ist mit einem Abfragehebel 25 versehen (Fig. 1) mit dem in nicht dargestellter Weise in der Betriebsstellung des Schalterwagens 3 eine Drehbewegung der Welle 22 sperrbar ist, das heißt, der Schalterwagen 3 bildet in seiner Betriebsstellung einen Anschlag für den Abfragehebel 25.

Wirkungsweise: Die Ausgangslage möge so sein, wie in Fig. 1 dargestellt. Um das Schaltfeld funktionstüchtig zu machen, ist ein Schalteragen in den Schalterraum 3 einzufahren. Der Schalterwagen kann jedoch nur bis in seine Trennstellung eingefahren werden, da der Abfragehebel 25 ein weitergehendes Einfahren verhindert. Nach dem Einfahren des Schalterwagens wird die Tür 2 geschlossen, das heißt, sie wird an den Frontteil des Gerüstes 1 angelegt. Hierbei durchgreift der Zapfen 19 ein Langloch 26 im Pfosten 13 und das Durchgangsloch 20 im Schieber 16. Der Zapfen 19 ist so lang, daß er in der Schließlage der Tür 2 den Eingriff des Stiftes 18 in die Blattfeder 17 aufhebt. Durch Verschiebung der Leiste 18 mittels der Handhabe 14 werden sodann die Riegel 11 mit den Riegelaufnahmen 12 vereinigt. Zugleich wird der Schieber 16 vom Zapfen 19 mitgenommen. Mit der Bewegung des Schiebers 16 wird auch die Kurbel 21 bewegt, die ihrerseits die Welle 22 dreht. Mit der Welle 22 wird die aus dem ersten Hebel 23 und dem zweiten Hebel 24 bestehende Knickhebeleinrichtung betätigt, die ihrerseits die Blende 7 so bewegt, daß sie die Öffnungen 6 freigibt. Da die Tür 2 verriegelt ist, kann der Schalterwagen nunmehr in seine Betriebsstellung eingefahren werden. Voraussetzung hierbei ist, daß der vom Schalterwagen getragene Schalter ausgeschaltet ist, wofür eine nicht zum Erfindungsgegenstand gehörende und daher auch nicht gezeigte Vorrichtung sorgt. Der Abfragehebel 25 steht während des beschriebenen Vorganges so daß er das Verschieben des Schalterwagens nicht behindert. Andererseits ist der Abfragehebel 25 so auf der Welle 22 angeordnet und ferner so ausgebildet, daß er am Schalterwagen anschlägt, wenn sich dieser in der Betriebsstellung befindet. Während der Schalterwagen im Schwenkweg des Abfragehebels 25 liegt, kann die Welle 22 nicht gedreht werden. Damit ist auch eine Bewegung der Kurbel 21 und eine Bewegung des Schiebers 16 gesperrt. Da der Zapfen 19 der Leiste 8 noch immer in den Schieber 16 eingreift, kann auch die Leiste 8 zum Öffnen der Tür 2 nicht verschoben werden. Damit ist die Bedingung erfüllt, daß die Tür 2 nicht geöffnet werden kann, wenn sich der Schalterwagen in seiner Betriebsstellung befindet. Wird der Schalterwagen jedoch in seine Trennstellung verschoben, gibt er den Abfragehebel 25 frei. Nunmehr kann die Tür 2 entriegelt werden. Für diesen Vorgang wird die Leiste 8 mittels der Handhabe 14 verschoben. Mit dem Verschieben der Leiste 8 verschiebt der Zapfen 19 auch den Schieber 16, der die Kurbel 21 betätigt. Diese dreht die Welle 22, welche das Knickhebelgetriebe 23, 24 betätigt, das seinerseits die Blende 7 vor die Öffnungen 6 schiebt. Damit ist die Bedingung erfüllt, daß die Offnungen 6 in der Trennstellung des Schalterwagens verschlossen sind.

## Patentansprüche

1. Gekapseltes elektrisches Schaltfeld, mit den Merkmalen:

   a) die Kapselung enthält einen mit einer Tür (2) verschließbaren Schalterraum (3), einen Sammelschienenraum und einen Kabelanschlußraum;

   b) im Schalterraum (3) ist ein Schalterwagen aus einer Trennstellung in eine Betriebsstellung fahrbar;

   c) der Schalterraum (3) ist vom Sammelschienenraum und vom Kabelanschlußraum durch eine Schottwand (5) getrennt, die Öffnungen (6) aufweist, die von Einfahrkontaktstücken des Schalterwagens durchgriffen sind, wenn sich dieser in seiner Betriebsstellung befindet;

   d) die Öffnungen (6) der Schottwand (5) sind in der Trennstellung des Schalteragens und bei vollständig ausgefahrenem Schalterwagen durch mindestens eine Blende (7) verschließbar,

   **gekennzeichnet durch** die Merkmale:

   e) am Rücken der Tür (2) ist eine verschiebbare Leiste (8) angeordnet, die Riegel (11) für den formschlüssigen Eingriff in Riegelaufnahmen (12) an der Zellenfront und eine zum Verriegeln der Tür (2) von der Türfront aus betätigbare Handhabe (14) trägt;

   f) der Leiste (8) ist ein am Rücken der Zellenfront angeordneter Schieber (16) zugeordnet, auf dessen freier Seite eine am oberen Ende festgelegte Blattfeder (17) anliegt, die bei offener Tür (2) von einem Stift (18) durchgriffen ist, den der Schieber (16) trägt;

   g) die Blattfeder (17) ist beim Schließen der Tür (2) zur Freigabe des Stiftes (18) gegen ihre Federkraft durch einen an der Leiste (8) befestigten Zapfen (19) auslenkbar, mit dem eine Verriegelungsbewegung der Leiste (8) auf den von Stift (18) freigegebenen Schieber (16) übertragbar ist;

   h) am Schieber (16) ist eine Kurbel (21) angelenkt, deren freies Ende an einer Welle (22) angreift, die sich zu der Schottwand (5) erstreckt und dort einen ersten Hebel (23) einer Knickhebeleinrichtung trägt, deren zweiter Hebel (24) an der Blende (7) angelenkt ist:

i) bei entriegelter Tür (2) bildet ein auf der Welle (22) befestigter Abfragehebel (25) eine Sperre gegen eine Fahrbewegung des Schalterwagens von der Trennstellung in die Betriebsstellung, während in seiner Betriebsstellung der Schalterwagen im Schwenkweg des Abfragehebels (25) liegt.

2. Schaltfeld nach Anspruch 1, **dadurch gekennzeichnet**, daß die Blende vertikal angeordnet ist.

## Claims

1. Encased electrical switchgear panel having the features:

    a) the casing contains a switch space (3) which can be closed by a door (2), a bus bar space and a cable connection space;

    b) in the switch space (3) a switch truck can be moved out of a disconnection position into an operating position;

    c) the switch space (3) is separated from the bus bar space and from the cable connection space by a partition plate (5) which has openings (6) through which incoming contact pieces of the switch truck engage when the latter is located in its operating position;

    d) the openings (6) of the partition plate (5) can be closed by means of at least one cover (7) in the disconnection position of the switch truck and when the switch truck has exited completely,

characterized by the features:

    e) on the rear of the door (2) there is arranged a displaceable border (8) which carries bolts (11) for the form-locking engagement in bolt receptacles (12) at the cell front and a handle (14) which can be operated to bolt the door (2) from the front of the door;

    f) a slide (16) arranged on the rear of the cell front is associated with the border (8), on the free side of which slide a leaf-type spring (17) rests, fixed at the upper end, through which leaf-type spring (17) a pin (18) engages when the door (2) is open, the pin being carried by the slide (16);

    g) the leaf-type spring (17) can be deflected out while the door (2) is closed for the release of the pin (18) against its spring force by means of a lug (19) fastened to the border (8), with which lug an interlocking movement of the border (8) can be transmitted on to the slide (16) released from the pin (18);

    h) a crank (21) is hinged to the slide (16), the free end of the crank engaging on a shaft (22) which extends to the partition plate (5) and carries there a first lever (23) of an articulated lever device, the second lever (24) of which is hinged to the cover (7);

    i) with unbolted door (2) a responding lever (25) fastened on to the shaft (22) forms a block against a travelling motion of the switch truck from the disconnection position into the operating position, while in its operating position the switch truck lies in the swinging path of the responding lever (25).

2. Switchgear panel according to claim 1, characterized in that the cover is arranged vertically.

## Revendications

1. Panneau de commande électrique encapsulé, présentant les caractéristiques suivantes :

    a) le capot présente un espace (3) qui loge les interrupteurs et qui peut être fermé par une porte (2), un espace logeant les barres omnibus et un espace de raccordement des câbles;

    b) dans l'espace (3) logeant les interrupteurs, un chariot porte-interrupteurs peut être déplacé d'une position de coupure dans une position de service;

    c) l'espace (3) logeant les interrupteurs est séparé de l'espace logeant des barres omnibus et de l'espace de raccordement des câbles, par une cloison (5) qui comporte des ouvertures (6) que traversent des pièces de contact enfichables du chariot porte-interrupteurs, lorsque ce dernier est situé dans sa position de service;

    d) les ouvertures (6) de la cloison (5) peuvent être obturées par au moins un obturateur (7), lorsque le chariot porte-interrupteurs est dans la position de coupure et lorsque le chariot porte-interrupteur est complètement ressorti,

caractérisé par les caractéristiques suivantes :

    e) au dos de la porte (2) est montée une barrette mobile (8) qui porte des verrous (11) destinés à s'engager, selon une liaison par complémentarité de formes, dans des logements (12) situés sur la face avant de la cellule, et une manette (14) pouvant être actionnée à partir de la face avant de la porte (2) pour verrouiller cette dernière;

    f) à la barrette (8) est associé un coulisseau (16) qui est monté au dos de la face avant de la cellule et sur le côté libre duquel s'applique un ressort à lame (17) qui est fixé à son extrémité supérieure et, lorsque la porte (2) est ouverte, est traversé par une tige (8) que porte le coulisseau (16);

g) lors de la fermeture de la porte (2), le ressort à lame (17) peut être dévié pour la libération de la tige (18), à l'encontre de la force de son ressort, par un téton (19) fixé à la barrette (8) et au moyen duquel un mouvement de verrouillage de la barrette (8) peut être transmis au coulisseau (16) qui libère la tige (18);

h) sur le coulisseau (16) est articulée une manivelle (21), dont l'extrémité libre attaque un arbre (22) qui s'étend en direction de la cloison (5) et porte, en cet endroit, un premier bras (23) d'un dispositif à levier coudé dont le second bras (24) est articulé sur l'obturateur (7);

i) lorsque la porte (2) est déverrouillée, un levier d'interrogation (25) fixé sur l'arbre (22) forme une unité de blocage vis-à-vis d'un déplacement du chariot porte-interrupteurs de la position de coupure dans la position de service, tandis que, lorsqu'il est dans sa position de service, le chariot porte-interrupteurs est situé dans la voie de pivotement du levier d'interrogation (25).

2. Panneau de commande suivant la revendication 1, caractérisé par le fait que l'obturateur est disposé verticalement.

FIG 1

FIG 3

FIG 2